# EUROPEAN PATENT SPECIFICATION

(11) **EP 3 969 636 B1**
(45) Date of publication and mention of the grant of the patent: **18.09.2024**
(21) Application number: 20724872.5
(22) Date of filing: 15.05.2020
(51) Int. Cl.: C23C 18/20, C23C 18/30, C23C 18/36, C23C 18/40, C23C 18/44, C23C 18/52

(54) **LIGHT PERMEABLE METALLIC COATINGS AND METHOD FOR THE MANUFACTURE THEREOF**
LICHTDURCHLÄSSIGE METALLISCHE BESCHICHTUNGEN FÜR BELEUCHTUNGSANWENDUNGEN
REVÊTEMENTS MÉTALLIQUES PERMÉABLES À LA LUMIÈRE POUR DES APPLICATIONS D'ÉCLAIRAGE

(30) Priority: 17.05.2019 EP 19382389
(43) Date of publication of application: 23.03.2022
(73) Proprietor: Fundación Cidetec, 20014 Donostia-San Sebastián (ES)
(72) Inventor: SALICIO PAZ, Asier, 20014 DONOSTIA-SAN SEBASTIÁN (ES); GARCÍA LECINA, Eva, 20014 DONOSTIA-SAN SEBASTIÁN (ES); LUIS MONASTERIO, Egoitz, 20014 DONOSTIA-SAN SEBASTIÁN (ES)
(74) Representative: ZBM Patents - Zea, Barlocci & Markvardsen
(86) International application number: PCT/EP2020/063633
(87) International publication number: WO 2020/234162

(56) References cited:
- US-A- 4 950 553
- US-A1- 2003 034 241
- US-A1- 2016 145 745

## Description

This application claims the benefit of European Patent Application 19382389.5 filed on May 17, 2019.

### Technical Field

The present disclosure relates to the field of decorative metallized articles. In particular, it relates to a decorative metal coating permeable to the visible light, to a method for forming this metal coating on a substrate, and to an article of manufacture having a decorative metal coating permeable to the visible light.

### Background Art

Metallized plastics have become of interest in recent years as a replacement for metal in such articles as enclosures for electrical appliances, microwave ovens, business machines, automotive grills or emblems and the like. Metallization may be achieved by various processes including electrodeposition, electroless deposition, chemical vapor and physical vapor deposition.

Electroless deposition of metals such as nickel is often particularly advantageous because it leads to excellent film properties and can form a film uniformly even for products having complicated shapes and the like. Consequently, it is widely used in various fields such as electronics, automotive, petrochemical, aerospace, etc.

Electroless nickel plating is an auto-catalytic chemical process used to deposit a nickel-based alloy (nickel-phosphorus when the reducing agent is sodium hypophosphite and/or nickel-boron when the reducing agent is boron based) on a solid workpiece. Such coatings can be produced either on metal as on plastic substrates, the later by subjecting the substrate to a proper pre-plating catalyst stage. The process relies on the presence of a reducing agent in the same electrolyte as the metallic cations so driving the reduction of the metal ions to form metal films. No electrical current is needed during the process.

Electroless nickel plating solutions are well known in the art. The contents of the solution and the plating parameters such as temperature, pH and immersion time will depend on the precise nature of the substrate to be coated. A typical electroless deposition bath is a solution comprising a nickel salt, a reducing agent such as a hypophosphite salt, a borohydride salt or hydrazine, and various additives.

One of the problems which arises in the metallization of some substrates such as plastics, especially by electroless methods, is the lack of adhesion of the metal layer to the substrate. For this reason, electroless metallization of polymers requires different steps including (i) the preconditioning of the surface, (ii) the chemisorption of a catalyst to activate the so-modified surface towards subsequent metallization, and (iii) the metallization itself.

Furthermore, the appropriate type of plating film is selected depending on the final applications, because the film characteristics are determined by the phosphorus content which, at the same time, depends on the chemistry and working conditions of the electroless nickel electrolyte.

There are three main categories of electroless nickel coatings namely low phosphorus (phosphorus content is about 1 to 4 wt%), medium phosphorus (phosphorus content is 6 to about 9 wt%), and high phosphorus (phosphorus content is about 10 to 25 wt%). They exhibit different properties depending on the phosphorus content. Thus, low phosphorus coatings show superior mechanical properties at the expense of a limited corrosion resistance whereas high phosphorus coatings possess outstanding corrosion resistance but limited mechanical properties. Medium content coatings show a good compromise between the formers in terms of functional properties.

Electroless plating can be easily applied to obtain coatings from 10 to 100 micrometers. In the case of functional applications such as corrosion protection, wear reduction, hardness, fatigue strength no less than 10-15 micron of electroless nickel is plated to provide the desired features to the base materials it is plated on. Among these features, aesthetic is not usually demanded. Such thicknesses may be produced by contact with the electroless plating solution for periods on the order of 10-60 minutes at temperatures in the range of 60 °C to 90 °C; those skilled in the art will be able to determine the time and temperature conditions under which to deposit a coating of the required thickness. However, when thinner coatings such as in the nanometer scale are required, other film properties such us homogeneity and adhesion of the coating, as well as a proper aesthetic appearance, are important.

Decorative coated substrates with a metal-look are also of interest for illumination applications, such as emblems or other articles which can be illuminated at the required conditions (for instance at night) and having a metallic appearance in the absence of illumination.

US2018345877 discloses a brand emblem that is illuminated over its full area or in part, preferably for use in the interior as well as in the exterior in the automotive sector. The chrome-look coating of the decorative element can be structured in such a manner that light can pass through it directly. It is disclosed that deposition technologies such as vacuum vapor deposition (PVD, PECVD or CVD), as well as paint-coating techniques, are particularly suitable for this. The decorative element can also be a galvanized component, wherein galvanization over the full area or an actual metal foil applied to a support component is unsuitable for direct illumination, since an actual metal and a galvanic deposition are opaque for light. Thus, no specific thickness of the coating is required, provided it has a chrome-look or metal-look.

US2003/034241 discloses a method for manufacturing a metal coated substrate by forming a metal coating on a surface of a transparent polycarbonate substrate, comprising the following steps: immersing the substrate in a colloidal palladium/tin colloidal solution and carrying out electroless nickel plating to form a thin nickel coating permeable to light having a thickness of 30 to 200 nm, preferably 30 to 100 nm.

Thus, there is still a need to provide new methods for covering a base material with a metal coating having the required visible light permeability, metallic luster appearance, particularly having a specular shine, and structural and mechanical properties.

### Summary of Invention

Inventors have found that by carrying out the method of the invention, a relatively thin metal coating such as having a thickness from 50 to 450 nm, particularly from 50 to 175 nm, and more particularly from 75 to 150 nm, can be formed on the surface of a substrate, the metal coating having a good permeability to visible light and having an excellent metallic luster appearance, particularly having a specular shine. Additionally, advantageously the metal coating is a homogeneous coating having a uniform thickness and composition. Hence, a decorative coated substrate having a metal-look, particularly a chrome-look, that is permeable to visible light can be obtained.

Thus, one aspect of the present invention relates to method for manufacturing a metal coated substrate by forming a metal coating on a surface of a substrate, comprising the following steps:
a) carrying out a sensitization step for 12 to 17 min by:
   - immersing the substrate in a colloidal palladium/tin colloidal solution;
   - immersing the substrate in a tin aqueous solution and, thereafter, in a palladium aqueous solution, or vice versa; or
   - depositing on the substrate a catalitically active metallic nuclei such as a silver nucleus by immersion or a spray method;
c) optionally, immersing the substrate in a PdCI solution;
d) carrying out electroless metal plating by immersing the substrate in a nickel electrolyte solution to form a metal coating on the surface of the substrate in order to obtain a continuous film-coated substrate, wherein the metal electrolyte solution comprises a source of nickel cations, a complexing agent and a reducing agent which is a hypophosphite alkali metal salt,
   wherein electroless plating is carried out for 5 to 20 seconds at a temperature from 65 to 75 °C at a pH of 6 to 7 in order to obtain a coating with a phosphorus content from 1 to 4 wt% related to the total weight coating, or
   wherein electroless plating is carried out for 15 to 60 seconds at a temperature from 40 to 60 °C at a pH of 8 to 10 in order to obtain a coating with a phosphorus content from 10 to 25 wt%, particularly from 10 to 14 wt%, related to the total weight coating, wherein the metal coated substrate is for applications that require concealed illumination systems, image recording systems, sensors, or radar antennas.

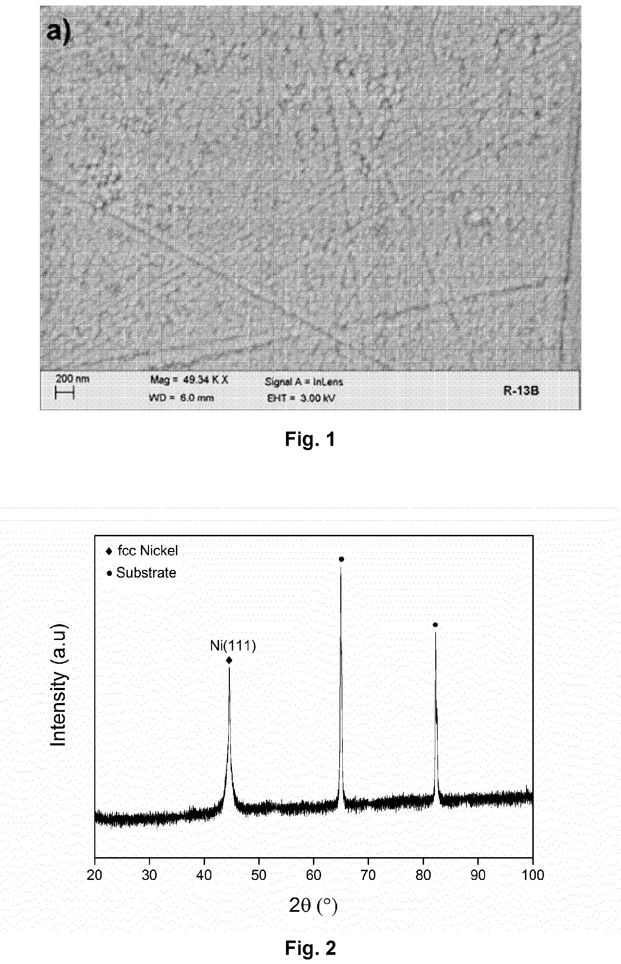

As observed in Fig. 1 a coating having a uniform surface is formed, even though the coating has a thickness in the nanometer scale.

The method of the present disclosure allows carrying out electroless metallization on several substrates such as polycarbonate without the necessity of complicated pretreatments to preconditioning of the surface, thus, allowing simplification of the conventional electroless processes commonly used up to now, to obtain a decorative, homogeneous and defect-free coating with a desired thickness, appropriate to their use in specific applications such as illumination.

Another aspect of the invention relates to the metal coated substrate obtainable by the process of the invention, wherein the coated substrate has a coating having a thickness from 50 to 175 nm.

Another aspect of the invention relates to the use of a metal coated substrate as defined herein above and below for concealing illumination systems, image recording systems, sensors or radar antennas. Thus, the metal coated substrate of the invention is useful for the production of an article of manufacture comprising an illumination system, an image recording system, a sensor or a radar antenna.

The invention also concerns to an article of manufacture made of the metal coated substrate of the invention.

The article can be manufactured by a process comprising forming said article from a metal coated substrate obtainable by the process of the invention. The article can be obtained by methods known in the art.

### Brief Description of Drawings

Fig. 1 shows the image of the electroless nickel coating of sample ref. LP-1 of Example 1. The image was obtained by Field Emission Scanning Electron Microscope (Zeiss, Ultra-Plus FESEM) operated at 3 kV) at a magnification of about 50,000 X.
Fig. 2 shows the image obtained X-Ray diffraction as explained in Example 3.

### Detailed description of the invention

All terms as used herein in this application, unless otherwise stated, shall be understood in their ordinary meaning as known in the art. Other more specific definitions terms as used in the present application are as set forth below and are intended to apply uniformly throughout the specification and claims unless an otherwise expressly set out definition provides a broader definition.

In physics, electromagnetic radiation refers to the waves of the electromagnetic field, propagating (radiating) through space, carrying electromagnetic radiant energy. Electromagnetic waves are classified according to their frequency, so it includes radio waves, microwaves, infrared, (visible) light, ultraviolet, X-rays, and gamma rays.

As used herein, the term "visible light" refers to the portion of the electromagnetic spectrum that is visible to the human eye and is responsible for the sense of sight.[1] Visible light is usually defined as having wavelengths in the range of 400-700 nanometers (nm).

As used herein, the term "homogeneous layer" or "homogeneous coating", used herein interchangeably refers to a layer or coating covering all the surface of the substrate, namely, the 100% of the surface, and having a uniform thickness and composition.

It is noted that, as used in this specification and the appended claims, the singular forms "a", "an" and "the" include plural referents unless the context clearly dictates otherwise.

As mentioned above, the metallization process of substrates of the present invention is a multistep process comprising several steps addressed to prepare the surface of the substrate in such a way that the electroless nickel plating allows forming a coating having the required visible light permeability, metallic luster appearance, and structural and mechanical properties, and a good adhesion with the substrate.

Previously to step a), a surface cleaning can be performed, for instance, by treatment with a detergent and rinsing or by treatment with a degreasing solution such as an acid or alkali solution, or a degreasing agent. Detergents, degreasing solutions and degreasing agents suitable for the mentioned surface cleaning are already known and commercially available.

As mentioned above, a sensitization step (step a) is carried out by immersing the substrate in a colloidal palladium/tin solution. Alternatively, the substrate can be immersed in a tin aqueous solution and, thereafter, in a palladium aqueous solution, or vice versa. Examples of commercially available colloidal palladium/tin solutions are Neolink Activator (Atotech), Macuplex D-34 (MacDermid), and Silken Catalyst 501 (Coventya). The objective of the sensitization step is to render active places over the substrate surface so the electroless process can be initiated on the metallic nuclei. It is possible to perform the sensitization step with other metallic nuclei catalytically active towards the electroless process such as silver, tin or the like. These metallic nuclei can be deposited by immersion, or a spray method.

Subsequently, an acceleration step (step b) is carried out with an accelerator solution which is an aqueous solution of an acid. The acid can be selected, for example, from the group consisting of sulfuric acid, hydrochloric acid, citric acid and tetrafluoroboric acid. In the case of a palladium/tin colloid, the accelerator solution helps to remove the tin compounds which served as the protective colloid. Examples of commercially available commonly used accelerator solutions are Adhemax Accelerator (Atotech), Macuplex GS-50 (MacDermid), and Silken Accelerator 602 (Coventya).

After the acceleration step, an activation step (step c) can be optionally carried out by immersing the substrate in a PdCI solution adjusted to acid pH (i.e. a pH less than 7) by the addition of HCl. Particularly, the amount of PdCl in the solution can be from 0.1 to 0.5 g/L, and the pH is from 1 to 4.

Electroless plating allows depositing a homogeneous metallic layer on a substrate which can be either a conductive material or an insulator (i.e. non-conductive) material. The resulting metallic coating is in fact an alloy, as part of the reducing agent is co-deposited along with the metal. The metallic layer, when deposited sufficiently thin and homogeneous, becomes permeable to visible light.

According to the invention, the immersion of the substrate in a colloidal palladium/tin colloidal solution (step a) is carried out for 12 to 17 min, particularly for 15 min.

In another embodiment, optionally in combination with one or more features of the embodiments defined above, electroless coating (i.e. step d) is carried out for 5 to 60 seconds, particularly for 10 to 60 seconds, more particularly for 10 to 30 seconds, even more particularly for 20 seconds. This allows obtaining a metal coating having a thickness from 50 to 175 nm, particularly from 75 to 150nm. Particularly, the metal coating is a homogeneous coating having a uniform thickness and composition.

The metal constituting the coating layer is nickel or a nickel alloy. In the electroless metal plating step, the electroless plating solution will contain an appropriate metal depending on the type of the metal coating formed on the surface of the substrate. As a consequence, electroless metal plating will be carried out in a bath of an electrolyte solution (also called electroless plating bath) basically comprising a source of cations of the corresponding metal or metals, a complexing agent, and a reducing agent.

Thus, according to the invention, optionally in combination with one or more features of the embodiments defined above, the metal coating is selected from the group consisting of a nickel and a nickel alloy coating, and the electrolyte solution comprises a source of cations.

As an instance, electroless nickel plating can be carried out in an electroless plating bath containing a source of nickel cations, a complexing agent such as glycine, and a hypophosphite reducing agent.

Examples of nickel compounds useful as source of nickel cations include nickel sulfate (anhydrous or hydrated), nickel hypophosphite, nickel sulfamate nickel carbonate, nickel chloride or a combination thereof. Normally, hydrated nickel sulfate is preferred. Typically, in order to get a nickel or nickel alloy coating the electroless plating bath has a nickel ions concentration of from 3 g/L to 20 g/L, particularly from 5 g/L to 10 g/L.

Examples of reducing agents include hypophosphite salts such as hypophosphite alkali metal salts, particularly sodium hypophosphite. More particularly, the reducing agent is a hypophosphite salt and it is in an amount from 15 to 75 g/L, particularly from 20 to 40 g/L.

Examples of complexing agents include acetate ethylendiamine, malate, citrate, glycine, and lactate. Particularly, the complexing agent can be in an amount from 1 to 60 g/L, particularly from 20 to 30 g/L.

The electroless plating bath can also comprise a stabilizer such as lead, cadmium, sulfur, and thiourea. Particularly, the stabilizer can be in an amount from 1 ppm to 10 ppm.

As used herein, the term "low phosphorus (LP) coating" refers to a coating comprising phosphorus in an amount from 1 to 4 wt% related to the total weight coating.

As used herein, the term "high phosphorus (HP) coating" refers to a coating comprising phosphorus in an amount from 10 to 25 wt%, particularly from 10 to 14 wt%, related to the total weight coating.

As used herein, the term "medium phosphorus (MP) coating" refers to a coating comprising phosphorus in an amount from 5 to 9 wt% related to the total weight coating.

The amount of phosphorus in the final coating will depend on the concentration of the source of phosphorus (such as sodium hypophosphite) in the electrolyte solution, the pH of this electrolyte solution, and the presence and amount of complexing agent. A skilled person in the art will know which concentration of the source of phosphorus, the amount of complexing agent and the pH of the solution in order to obtain the sought amount of phosphorus in the final coating.

The deposition reaction takes place in the bath and generally involves the reduction of a nickel cation to form a nickel coating on the desired substrate surface.

In an embodiment, optionally in combination with one or more features of the embodiments defined above, the electrolyte solution is an electrolyte solution capable of providing a low phosphorus (LP) coating. Electrolyte solutions capable of providing a LP coating are commercially available. Examples of electrolyte solution capable of providing a LP coating are Niklad ELV 824 (from Macdermid Enthone Industrial Solutions), Nichem^{®} (from Atotech), and Enova EF 243 (from Coventya). As an instance, the LP electrolyte solution comprises from 15 to 30 g/L of a hypophosphite salt and from 1 to 40 g/L of a complexing agent, and has a pH from 6 to 8. The amount of source of nickel cations is such that the amount of nickel ions is from 3 g/L to 20 g/L, particularly from 3 g/L to 10 g/L. LP coatings exhibit a nano crystalline structure and allow a higher plating rate and a better coverage of the surface of the substrate, as well as a better control of the thickness of the coating applied onto the surface of the substrate.

In another embodiment, optionally in combination with one or more features of the embodiments defined above, the electrolyte solution is an electrolyte solution capable of providing high phosphorus (HP) coating. Electrolyte solutions capable of providing a HP coating are commercially available. As an instance, Macuplex M550 (from Macdermid Enthone Industrial Solutions) can be used.

The substrate is made of a suitable material such as a resin having a small visible light transmission loss.

Examples of resins include acrylonitrile-butadiene-styrene (ABS), acrylonitrile ethylene styrene (AES), polymethyl methacrylate (PMMA), polyurethane resins, polyamide, polyurea, polyester resins, polyether ether ketones, polyvinyl chloride resins, polyether sulfones (PES), cellulose resins, and polycarbonate (PC), copolymers and mixtures thereof (such as ABS+PC). Note that these resin-based materials are listed as examples and many others thermosetting and/or thermostable resin could be used as suitable substrates. Particularly the substrate is PC. The substrate is in the form of a molded article, which can be manufactured by any conventional method, such as melt molding or casting. The substrate is not limited to resins, but it would be also possible to apply the coating on transparent substrates like glass or semiconductors such as ITO (indium-tin-oxide), conducting polymers such as poly(3,4-ethylenedioxythiophene) PEDOT or the like. Thus, in another particular embodiment, optionally in combination with one or more features of the embodiments defined above, the substrate is a material exhibiting a small visible light transmission loss such as thermosetting and/or thermostable resins, glass, semiconductor materials or a combination thereof.

The thickness of the substrate is not relevant provided it is transparent to visible light or has a higher permeability to visible light than the metal coating.

In a first alternative according to the invention, optionally in combination with one or more features of the embodiments defined above, step a) is carried out for 12 to 17 min, and wherein in step d) the metal electrolyte solution is a nickel electrolyte solution, the reducing agent is a hypophosphite alkali metal salt, and electroless plating is carried out for 5 to 20 seconds at a temperature from 65 to 75 °C at a pH of 6 to 7 in order to obtain a coating with a phosphorus content from 1 to 4 wt% related to the total weight coating. In a more particular embodiment, step a) is carried out for 15 min, an electroless plating is carried out for 10 seconds at a temperature from 70 to 75 °C in a nickel electrolyte solution at a pH of 6.5.

The coating with a low phosphorus content, i.e. with a phosphorus content from 1 to 4 wt%, exhibit a nanocrystalline structure. The coating microstructure can be measured by X-ray diffraction (Bruker, D8) using CuKα radiation (λ = 1.5418 Å) in the Bragg Brentano geometry. Crystallite size can be measured using the Scherrer's equation which is implemented in the EVA software ^{®} (Bruker) of the diffractometer. Measurement range was 20-100 °C. The Scherrer's equation is applied in the most intense reflection for the face centered cubic (fcc) nickel phase (according to PDF 065-2865) corresponding to the (111) reflection. Thus, in a more particular embodiment, the electroless nickel coating has a nanocrystalline structure yielding crystal size values of up to 10 nm, such as from 2 to 10 nm, calculated by the Scherrer's equation by X-ray diffraction with CuKα radiation (λ = 1.5418 Å) in the Bragg Brentano geometry. As mentioned above, by carrying out the electroless plating with an electrolyte solution providing a low phosphorus content, a higher plating rate and a better coverage of the surface of the substrate are, as well as a better control of the thickness of the coating applied onto the surface of the substrate are provided.

In a second alternative according to the invention, optionally in combination with one or more features of the embodiments defined above, step a) is carried out for 12 to 17 min, and wherein in step d) the metal electrolyte solution is a nickel electrolyte solution, the reducing agent is a hypophosphite alkali metal salt, and electroless plating is carried out for 15 to 60 seconds, particularly for 25 to 35 seconds, at a temperature from 40 to 60 °C in an electroless nickel electrolyte solution having a a pH of 8 to 10 in order to obtain a coating with a high phosphorus content, i.e. with a phosphorus content from 10 to 25 wt%, particularly from 10 to 14 wt%, related to the total weight coating. This coating exhibits an amorphous structure. In a more particular embodiment, optionally in combination with one or more features of the embodiments defined above, step a) is carried out for 15 min, an electroless plating is carried out for 30 seconds at a temperature from 60 °C in a nickel electrolyte solution at a pH of 9.

Finally, to protect the metallic coating from corrosive and mechanical influences, it is recommended to apply a protective layer such as organic, inorganic or hybrid coating, applied by spraying, immersion or the like.

As commented above, an inherent result of the process of the invention is that it provides metal coatings with a particularly good performance in terms of permeability to visible light and having an excellent metallic luster appearance. Thus, a metal coating can be formed on a surface of a non-conductive substrate to obtain a decorative coated substrate having a metal-look, particularly a chrome-look, while being permeable to visible light.

These properties make the metal coated substrate of the invention particularly suitable for the production of different articles of manufacture for illumination applications, including some applications of the automotive and aerospace industry. As an instance, the metal coated substrate of the invention can be placed in front of a camera device such as an automotive reversing camera keeping it hidden from the naked eye while maintaining its metallic appearance. However, general uses are not limited to the former and may include any potential application that requires concealed illumination systems, image recording systems, sensors, or radar antennas.

As mentioned above, the invention also concerns to an article of manufacture comprising the metal coated substrate of the invention.

In an embodiment, the article of manufacture is for illumination applications.

In another embodiment, the article of manufacture is for image recording. Particularly, it is an automotive reversing camera.

In another embodiment, the article of manufacture is comprises a sensor such as a light sensor.

In an embodiment, the article of manufacture comprises a radar antenna.

Such improved properties indicate that the metal coated substrate and article of manufacture obtained there from are different to the already known in the prior art.

Throughout the description and claims the word "comprise" and variations of the word, are not intended to exclude other technical features, additives, components, or steps.

The following examples and drawings are provided by way of illustration, and they are not intended to be limiting of the present invention. Furthermore, the present invention covers all possible combinations of particular and preferred embodiments described herein.

### Examples

### General procedure

Polycarbonate (PC) substrates (70 x 50 x 2 mm) were cleaned with a commercially available detergent and gently rinsed before surface sensitization. To make the surface active towards the electroless metal plating process, a metallic seeding step (sensitization step) was carried out by immersing the substrate in a commercially available colloidal Pd/Sn solution (Neolink Activator, Atotech Deutchland GMbH), which was held at 30 °C without stirring for a time interval of 1-20 min. After the metallic seeding the PC substrates were removed from the sensitization bath and rinsed with deionized water. In order to remove the excess of metallic catalyst, the sample was subjected to an accelerator stage using an acid-based solution (Adhemax accelerator, Atotech Deutchland GMbH). The accelerating solution worked at 48 °C under magnetic stirring for 2 minutes. After the accelerating stage, the sample was cleaned with deionized water and immersed in an electroless nickel solution.

The electroless nickel solution contained nickel sulfate, sodium hypophosphite, glycine as main complexing agent, and a stabilizer to produce a low phosphorus nickel coating.

Once the electroless plating was finished, the PC substrate was removed from the electroless plating bath, gently rinsed with deionized water and dried by air blowing.

The surface of the nickel phosphorus coatings was studied by Field Emission Scanning Electron Microscope (Zeiss, Ultra-Plus FESEM) operated at 3 kV of accelerating voltage.

Depending on the solution composition, it is possible to obtain different phosphorus content in the metallic layer. Thus, for the sake of comparison, high phosphorus (HP) and low phosphorus (LP) nickel electrolyte solutions were used, leading to coatings with HP or LP contents, having different electric conductivity and stress nature.

### Example 1

### Preparation of a high phosphorus Ni coating

A first PC substrate was treated according to the general procedure above. The sensitization time was set at 15 min. Electroless plating was performed using a high phosphorus commercial electroless nickel electrolyte (Macuplex M550, Macdermid Enthone Industrial Solutions) of pH 9 at 60 °C under magnetic stirring for 30 seconds. A homogeneous nickel coating (sample HP-1) was obtained.

The metal coating had a metallic luster appearance with a specular shine. Additionally, it was verified that it was highly permeable to visible light.

### Preparation of low phosphorus Ni coatings

Several PC substrates were treated according to the general procedure above. An electroless solution comprising 25 g/L hexahydrated nickel sulfate, 30 g/L sodium hypophosphite as reducing agent and 20 g/L glycine as main complexing agent and having a pH of 6.5 was used. Electroless plating was performed at 75 °C under magnetic stirring. Sensitization times and electroless plating times are shown in the Table 1 below.

**Table 1 - Experimental set-up for LP coatings.**

| Sample Ref | pH | T of electroless bath (°C) | Sensitization time (min) | Electroless Ni plating time (s) |
|---|---|---|---|---|
| LP-1 | 6.5 | 75 | 15 | 15 |
| LP-2 | 6.5 | 75 | 20 | 20 |
| LP-3 | 6.5 | 75 | 15 | 10+10 (bilayered) |

In sample reference LP-3, after 10 seconds in the electroless Ni plating bath, the substrate was removed for 1-3 seconds and later on reintroduced into the bath for another 10 seconds to apply another consecutive layer. Thus, in a total bath time of 20 seconds, 2 layers of 10 seconds each were formed.

A dense and homogeneous nickel coating having a metallic luster appearance with a specular shine was obtained for all the samples. The thickness range was between 75-150 nm as determined by Field Emission Scanning Electron Microscopy (see General Procedure). Additionally, it was verified that the metal coating was highly permeable to visible light.

In general, the higher plating rate of the LP coatings allowed better coverage of the PC surface as well as a better control of the applied thickness onto the PC surface.

### Example 2

Several PC substrates were coated with a low phosphorus nickel coating according to the general procedure described above (Example 1) from an electroless solution at pH 6.5. The sensitization time was set at 15 min. Electroless plating was performed at 75 °C for 10 seconds under magnetic stirring.

It was verified that the metal coating had a metallic luster appearance with a specular shine and was highly permeable to visible light.

### Example 3 (not according to the invention)

A low phosphorus nickel coating was obtained according to the general procedure describe above from an electroless solution at pH 6.6 and a temperature 75 °C for a total plating time of 1 min over polished low carbon steel samples. The coating microstructure was measured by X-ray diffraction (Bruker, D8) using CuKα radiation in the Bragg Brentano geometry (see Fig. 3). Crystallite size was evaluated using the Scherrer's equation which is implemented in the EVA software ^{®} (Bruker) of the diffractometer. Measurement range was 20-100 °C. The Scherrer's equation was applied in the most intense reflection for the face centered cubic (fcc) nickel phase (according to PDF 065-2865) corresponding to the (111) reflection. The remaining peaks in the diffractogram correspond to the base material. According to Scherrer's equation the calculated crystallite size for the electroless nickel coating was 8.1 nm.

### Example 4

Several PC substrate having low phosphorus Ni coatings were prepared following the procedure of Example 1, but for the specific features shown in Table 4, where the second and third experiments are according to the claimed invention.

In order to evaluate the applicability of these coated substrates for camera devices, values of transmittance data were measured and are shown in Table 4. These values demonstrate the feasibility of using these coated substrates for camera devices.

**Table 4 Transmittance values**

| Processing temperature (°) | Electroless nickel plating time (s) | Transmittance (%) |
|---|---|---|
| 65 | 30 | 10 |
| 70 | 10 | 5 |
| 75 | 15 | 3 |
| 75 | 30 | 0 |

Additionally, high quality images were obtained for the coated substrates. The quality of the images obtained evidenced the suitability of the PC coated substrates to be used for hiding a camera device. Application in which a camera device is hidden behind a metallized object include as a way of example reversing cameras in automobiles, however general uses are not limited to the former and may include any potential application which requires concealed illumination systems, image recording systems, sensors, or radar antennas.

### Citation List

1. US2018345877
2. US2003034241

## Claims

1. A method for manufacturing a metal coated substrate by forming a metal coating on a surface of a substrate, wherein the metal coated substrate is for applications that require concealed illumination systems, image recording systems, sensors or radar antennas, comprising the following steps:
a) carrying out a sensitization step by:
- immersing the substrate in a colloidal palladium/tin colloidal solution;
- immersing the substrate in a tin aqueous solution and, thereafter, in a palladium aqueous solution, or vice versa; or
- depositing on the substrate a silver nucleus by immersion or a spray method;
b) immersing the substrate in an acid solution;
c) optionally, immersing the substrate in a PdCI solution;
d) carrying out electroless metal plating by immersing the substrate in a nickel electrolyte solution to form a metal coating on the surface of the substrate in order to obtain a continuous film-coated substrate, wherein the metal electrolyte solution comprises a source of nickel cations, a complexing agent and a reducing agent which is a hypophosphite alkali metal salt,
**characterised in that**
the sensitization step is carried out for 12 to 17 min and either **in that** electroless plating is carried out for 5 to 20 seconds at a temperature from 65 to 75 °C at a pH of 6 to 7 in order to obtain a coating with a phosphorus content from 1 to 4 wt% related to the total weight coating, or
**in that** electroless plating is carried out for 15 to 60 seconds at a temperature from 40 to 60 °C at a pH of 8 to 10 in order to obtain a coating with a phosphorus content from 10 to 25 wt%, particularly from 10 to 14 wt%, related to the total weight coating.

2. The method according to claim 1, wherein step a) is carried out for 15 min.

3. The method according to claims 1 or 2, wherein the metal coating is a nickel coating, or a nickel alloy coating.

4. The method according to any one of claims 1 to 3, wherein the substrate is polycarbonate.

5. The method according to any one of claims 1 to 4, wherein step a) is carried out for 15 min, and electroless plating is carried out for 10 seconds at a temperature from 70 to 75 °C in a nickel electrolyte solution at a pH of 6.5.

6. The method according to claim 5, wherein the coating has a structure containing crystallites having a size of up to 10 nm, such as from 2 to 10 nm, calculated by using the Scherrer's equation by X-ray diffraction with CuKα radiation (λ = 1.5418 Å) in the Bragg Brentano geometry.

7. The method according to any one of claims 1 to 6, wherein step a) is carried out for 15 min, and electroless plating is carried out for 30 seconds at a temperature from 60 °C in a nickel electrolyte solution at a pH of 9.

8. A metal coated substrate obtainable by the method as defined in any one of claims 1 to 7, wherein the coated substrate has a coating having a thickness from 50 to 175 nm.

9. Use of the metal coated substrate as defined in claim 8 for concealing illumination systems, image recording systems, sensors or radar antennas.

10. An article of manufacture comprising the metal coated substrate of claim 8.

11. The article of manufacture of claim 10 for illumination applications.

12. The article of manufacture of claim 10 for image recording.

13. The article of manufacture of claim 12 that is an automotive reversing camera.

14. The article of manufacture of claim 10 comprising a sensor.

15. The article of manufacture of claim 10 comprising a radar antenna.

## Patentansprüche

1. Ein Verfahren zur Herstellung eines metallbeschichteten Substrats durch Bildung einer Metallbeschichtung auf einer Oberfläche eines Substrats, wobei das metallbeschichtete Substrat für Anwendungen ist, die verdeckte Beleuchtungssysteme, Bildaufnahmesysteme, Sensoren oder Radarantennen erfordern, umfassend die folgenden Schritte:
a) Durchführung eines Sensibilisierungsschrittes durch:
- Eintauchen des Substrats in eine kolloidale Palladium/Zinn Lösung;
- Eintauchen des Substrats in eine wässrige Zinnlösung und, danach, in eine wässrige Palladiumlösung, oder umgekehrt; oder
- Abscheiden eines Silberkeims durch Eintauchen oder ein Sprühverfahren auf dem Substrat;
b) Eintauchen des Substrats in eine saure Lösung;
c) wahlweise, Eintauchen des Substrats in eine PdCl-Lösung;
d) Durchführen eines stromlosen Metallüberzugs durch Eintauchen des Substrats in eine Nickelelektrolytlösung, um eine Metallbeschichtung auf der Oberfläche des Substrats zu bilden, um ein kontinuierliches filmbeschichtetes Substrat zu erhalten, wobei die Metallelektrolytlösung eine Quelle für Nickelkationen, einen Komplexbildner und ein Reduktionsmittel umfasst, welches ein Hypophosphitalkalimetallsalz ist,
**dadurch gekennzeichnet, dass** der Sensibilisierungsschritt für 12 bis 17 Minuten durchgeführt wird und entweder dass der stromlose Überzug für 5 bis 20 Sekunden bei einer Temperatur von 65 bis 75 °C bei einem pH-Wert von 6 bis 7 durchgeführt wird, um eine Beschichtung mit einem Phosphorgehalt von 1 bis 4 Gew.-%, bezogen auf die Gesamtgewichtsbeschichtung, zu erhalten, oder
dass der stromlose Überzug für 15 bis 60 Sekunden bei einer Temperatur von 40 bis 60 °C bei einem pH-Wert von 8 bis 10 durchgeführt wird, um eine Beschichtung mit einem Phosphorgehalt von 10 bis 25 Gew.-%, insbesondere von 10 bis 14 Gew.-%, bezogen auf die Gesamtgewichtsbeschichtung, zu erhalten.

2. Das Verfahren nach Anspruch 1, wobei der Schritt a) für 15 min durchgeführt wird.

3. Das Verfahren nach den Ansprüchen 1 oder 2, wobei die Metallbeschichtung eine Nickelbeschichtung oder eine Nickellegierungsbeschichtung ist.

4. Das Verfahren nach einem der Ansprüche 1 bis 3, wobei das Substrat Polycarbonat ist.

5. Das Verfahren nach einem der Ansprüche 1 bis 4, wobei der Schritt a) für 15 Minuten durchgeführt wird und der stromlose Überzug für 10 Sekunden bei einer Temperatur von 70 bis 75 °C in einer Nickelelektrolytlösung bei einem pH-Wert von 6,5 durchgeführt wird.

6. Das Verfahren nach Anspruch 5, wobei die Beschichtung eine Struktur hat, die Kristallite mit einer Größe von bis zu 10 nm, wie etwa von 2 bis 10 nm, enthält, berechnet unter Verwendung der Scherrer-Gleichung durch Röntgenbeugung mit CuKα-Strahlung (λ = 1,5418 Å) in der Bragg-Brentano-Geometrie.

7. Das Verfahren nach einem der Ansprüche 1 bis 6, wobei der Schritt a) für 15 Minuten durchgeführt wird und der stromlose Überzug für 30 Sekunden bei einer Temperatur von 60 °C in einer Nickelelektrolytlösung bei einem pH-Wert von 9 durchgeführt wird.

8. Ein metallbeschichtetes Substrat, das durch das Verfahren wie in einem der Ansprüche 1 bis 7 definiert erhalten werden kann, wobei das beschichtete Substrat eine Beschichtung mit einer Dicke von 50 bis 175 nm hat.

9. Verwendung des metallbeschichteten Substrats wie in Anspruch 8 definiert zur Verdeckung von Beleuchtungssystemen, Bildaufnahmesystemen, Sensoren oder Radarantennen.

10. Ein Erzeugnis umfassend das metallbeschichtete Substrat von Anspruch 8.

11. Das Erzeugnis von Anspruch 10 für Beleuchtungsanwendungen.

12. Das Erzeugnis von Anspruch 10 für die Bildaufzeichnung.

13. Das Erzeugnis von Anspruch 12, das eine Rückfahrkamera für Kraftfahrzeuge ist.

14. Das Erzeugnis von Anspruch 10, das einen Sensor umfasst.

15. Das Erzeugnis von Anspruch 10, das eine Radarantenne umfasst.

## Revendications

1. Un procédé de fabrication d'un substrat revêtu de métal en formant un revêtement métallique sur une surface d'un substrat, dans lequel le substrat revêtu de métal est destiné à des applications qui nécessitent des systèmes d'éclairage, des systèmes d'enregistrement d'images, des capteurs ou des antennes radar cachés, comprenant les étapes suivantes :
a) réaliser une étape de sensibilisation en :
- immergeant le substrat dans une solution colloïdale de palladium/étain ;
- immergeant le substrat dans une solution aqueuse d'étain et, par la suite, dans une solution aqueuse de palladium, ou vice versa ; ou
- déposant sur le substrat un noyau d'argent par immersion ou par un procédé de pulvérisation ;
b) immerger le substrat dans une solution acide ;
c) éventuellement, immerger le substrat dans une solution de PdCI ;
d) effectuer un placage métallique sans courant en immergeant le substrat dans une solution d'électrolyte de nickel pour former un revêtement métallique sur la surface du substrat afin d'obtenir un substrat revêtu d'un film continu, dans lequel la solution d'électrolyte métallique comprend une source de cations de nickel, un agent complexant et un agent réducteur qui est un sel de métal alcalin d'hypophosphite,
**caractérisé en ce que** l'étape de sensibilisation est effectuée pendant 12 à 17 min et soit **en ce que** le placage sans courant est effectué pendant 5 à 20 secondes à une température allant de 65 à 75 °C à un pH de 6 à 7 afin d'obtenir un revêtement avec une teneur en phosphore de 1 à 4 % en poids par rapport au poids total du revêtement, soit
**en ce que** le placage sans courant est effectué pendant 15 à 60 secondes à une température allant de 40 à 60 °C à un pH de 8 à 10 afin d'obtenir un revêtement avec une teneur en phosphore de 10 à 25 % en poids, en particulier de 10 à 14 % en poids, par rapport au poids total du revêtement.

2. Le procédé selon la revendication 1, dans lequel l'étape a) est réalisée pendant 15 min.

3. Le procédé selon les revendications 1 ou 2, dans lequel le revêtement métallique est un revêtement de nickel ou un revêtement d'alliage de nickel.

4. Le procédé selon l'une quelconque des revendications 1 à 3, dans lequel le substrat est du polycarbonate.

5. Le procédé selon l'une quelconque des revendications 1 à 4, dans lequel l'étape a) est effectuée pendant 15 min, et le placage sans courant est effectué pendant 10 secondes à une température de 70 à 75 °C dans une solution d'électrolyte de nickel à un pH de 6,5.

6. Le procédé selon la revendication 5, dans lequel le revêtement a une structure contenant des cristallites ayant une taille allant jusqu'à 10 nm, telle que de 2 à 10 nm, calculée en utilisant l'équation de Scherrer par diffraction des rayons X avec du rayonnement CuKα (λ = 1,5418 Å) dans la géométrie de Bragg Brentano.

7. Le procédé selon l'une quelconque des revendications 1 à 6, dans lequel l'étape a) est effectuée pendant 15 min, et le placage sans courant est effectué pendant 30 secondes à une température de 60 °C dans une solution d'électrolyte de nickel à un pH de 9.

8. Un substrat revêtu de métal pouvant être obtenu par le procédé tel que défini dans l'une quelconque des revendications 1 à 7, dans lequel le substrat revêtu a un revêtement ayant une épaisseur de 50 à 175 nm.

9. Utilisation du substrat revêtu de métal tel que défini dans la revendication 8 pour cacher des systèmes d'éclairage, des systèmes d'enregistrement d'images, des capteurs ou des antennes radar.

10. Un article de fabrication comprenant le substrat revêtu de métal de la revendication 8.

11. L'article de fabrication de la revendication 10 pour des applications d'éclairage.

12. L'article de fabrication de la revendication 10 pour l'enregistrement d'images.

13. L'article de fabrication de la revendication 12 qui est une caméra de recul automobile.

14. L'article de fabrication de la revendication 10 comprenant un capteur.

15. L'article de fabrication de la revendication 10 comprenant une antenne radar.
